# EUROPÄISCHE PATENTANMELDUNG

(11) **EP 0 845 350 A1**
(43) Veröffentlichungstag der Anmeldung: **03.06.1998**
(21) Anmeldenummer: 96810833.2
(22) Anmeldetag: 29.11.1996
(51) Int. Cl.: B32B 15/08, B65D 75/34

(54) **Kalt-verformbare Verbundfolie**

(71) Anmelder: Alusuisse Technology & Management AG, 8212 Neuhausen am Rheinfall (CH)
(72) Erfinder: Zeiter, Patrik, 8180 Bülach (CH); Pasbrig, Erwin, 78247 Hilzingen (DE); Breitler, Hans-Peter, 8280 Kreuzlingen (CH)

(57) **Zusammenfassung**

Kalverformbare Verbundfolien, beispielsweise für die Erzeugung von Durchdrück- oder Blisterpackungen, resp. Bodenteile davon, enthaltend eine wasserdampf- und gasundurchlässige Speerschicht und beidseitig der Sperrschicht wenigstens eine Kunststoffschicht.

Die Verbundfolie (1) einen Schichtaufbau aufweist, enthaltend nacheinander:
a) eine erste Kunststoff-Folie (10) aus der Reihe der gereckten PVC-Folien oder der orientierte Polyesterfolien und
b) eine Metallfolie (11), wie eine Aluminiumfolie, und
c) eine zweite Kunststoff-Folie (12) aus der Reihe der gereckten PVC-Folien, der orientierten Polyesterfolien oder der orientierten Polyamidfolien.
Die freien Seiten (15,16) der ersten und/oder der zweiten Kunststoff-Folie können eine Siegelschicht aufweisen oder die erste und/oder die zweite Kunststoff-Folie können siegelbar sein.

## Beschreibung

Vorliegende Erfindung betrifft kaltverformbare Verbundfolien, enthaltend eine wasserdampf-und gasundurchlässige Sperrschicht und beidseitig der Sperrschicht wenigstens eine Kunststoffschicht und die Verwendung der Verbundfolien.

Sogenannte Blister- oder Durchdrückpackungen sind bekannt. Beispielsweise werden Kunststoffolien oder Kunststofflaminate oder Kunststofflaminate, enthaltend eine Metallfolie, derart getieft, dass eine Mehrzahl von Vertiefungen oder Näpfchen entstehen. Zwischen den einzelnen Vertiefungen bilden sich Schultern aus. Die Schultern laufen vollständig um jede Vertiefung und bilden eine ebene Schulterfläche. Die derart vorbereiteten Materialien bilden den Bodenteil einer Blisterpackung aus. Die Bodenteile können mit den Inhaltsstoffen befüllt werden. Bekannt ist als Inhaltsstoff z.B. Tabletten, Kapseln, Dragées usw. aus dem pharmazeutischen Bereich, einzeln oder allenfalls zu mehreren, in jede Vertiefung einzufüllen. Anschliessend wird der Bodenteil, in der Regel mit einer Deckfolie, wie einer Metallfolie, zweckmässig Aluminiumfolie, oder einem Folienverbund, welcher beispielsweise eine Siegelschicht und eine Metallfolie enthält, durch Siegeln über die Siegelschicht an den Schultern der Bodenteile verschlossen. Zur Entnahme des Inhaltes, beispielsweise einer Tablette oder Kapsel, wird von der Bodenteilseite her die Vertiefung eingedrückt und die Tablette oder Kapsel drückt von innen gegen den metallfolienhaltigen Deckel über der Vertiefung. Durch die Inelastizität des Deckelmaterials reisst das Deckelmaterial ein und gibt den Inhalt frei. In anderer Ausführungform kann das Deckelmaterial unter dem Druck des Inhaltes sich abschälen (peelen) oder das Deckelmaterial kann mittels einer Lasche ergriffen und abgeschält werden.

Bei bekannten Blisterpackungslösungen, die, wie oben beschrieben, aus einem mit Vertiefungen versehenen Bodenteil und einem glatten Deckelteil hergestellt werden, sind relativ grosse Materialstärken vonnöten, um nach dem Tiefen genügend Wanddicke zu haben, und, gemessen an der Grösse der Vertiefungen, sind relativ breite Schultern Voraussetzung für eine luft-und feuchtigkeitsdichte Blisterpackung. Da die bekannten Folien nur eine begrenzte Verformbarkeit besitzen, kann das Verhältnis von Durchmesser zu Tiefe der Vertiefung nicht beliebig gewählt werden, d.h. die Wände der Vertiefungen weisen nur eine geringe Steilheit auf.

Aufgabe vorliegender Erfindung ist eine Durchdrück- oder Blisterpackung für z .B. Kapseln, Tabletten oder Pulver enthaltend pharmazeutische Wirkstoffe oder Diagnostika, mit hoher Schutzfunktion gegen Aufnahme von Wasserdampf und Gasen vorzuschlagen. Die Verpackungsgrösse soll dabei, bezogen auf die Zahl der Vertiefungen, klein gehalten werden können, beispielsweise durch steile Wände an den Vertiefungen oder insgesamt durch tieferes Verformen. Auch soll es möglich sein z.B. kleinere Schulterflächen vorzusehen und trotzdem soll eine sichere gas- und dampf-, resp. feuchtigkeitsdichte Siegelung zwischen Bodenteil und Deckelteil erreicht werden.

Erfindungsgemäss wird dies dadurch erreicht, dass die Verbundfolie einen Schichtaufbau aufweist, enthaltend nacheinander:
a) eine erste Kunststoff-Folie aus der Reihe der gereckten PVC-Folien oder der orientierten Polyesterfolien und
b) eine Metallfolie und
c) eine zweite Kunststoff-Folie aus der Reihe der gereckten PVC-Folien, der orientierten Polyesterfolien oder der orientierten Polyamidfolien.

Bevorzugt werden kaltverformbare Verbundfolien, welche einen Schichtaufbau aufweisen, enthaltend nacheinander:
a) eine erste Kunststoff-Folie aus der Reihe der gereckten PVC-Folien
b) eine Metallfolie und
c) eine zweite Kunststoff-Folie aus der Reihe der orientierten Polyesterfolien oder der orientierten Polyamidfolien.

Weitere bevorzugte kaltverformbare Verbundfolien nach vorliegender Erfindung sind solche, enthaltend nacheinander:
a) eine erste Kunststoff-Folie aus der Reihe der orientierten Polyesterfolien und
b) eine Metallfolie und
c) eine zweite Kunststoff-Folie aus der Reihe der orientierten Polyesterfolien oder der orientierten Polyamidfolien.

Bei der ersten und der zweiten Kunststoff-Folie kann es sich -- unabhängig voneinander - -um eine Monofolie oder um einen Folienverbund aus zwei oder mehreren Schichten gleicher oder unterschiedlicher Kunststoffe handeln. Um das Verformungsverhalten zu beeinflussen und die Materialmengen in wirtschaftlichen Grenzen zu halten, werden die erste und die zweite Kunststoff-Folie, welche zu den vorliegenden Verbundfolien verarbeitet werden in zweckmässigen resp. vorzugsweisen Dicken angewendet. Z.B. weisen die gereckten PVC-Folien eine Dicke von 10 bis 200 µm, zweckmässig 10 bis 100 µm, vorzugsweise von 30 bis 60 µm, die orientierten Polyesterfolien eine Dicke von 5 bis 60 µm, zweckmässig 10 bis 30 µm und vorzugsweise von 12 bis 25 µm, die Metallfolien eine Dicke von 5 bis 200 µm, zweckmässsig von 20 bis 100 µm und vorzugsweise von 45 bis 60 µm und die orientierten Polyamidfolien eine Dicke von 5 bis 40 µm, zweckmässig 10 bis 30 µm und vorzugsweise von 15 bis 25 µm.

Die Metallfolie ist bevorzugt eine Aluminiumfolie. Die Aluminiumfolie kann zweckmässig aus einer Aluminiumlegierung AlFeMn, wie AlFe1,5Mn, AlFeSi oder AlFeSiMn, beispielsweise in einer Reinheit von 97,5 und höher, vorzugsweise in einer Reinheit von 98,5 und höher, sein.

Die Metallfolie, resp. die Aluminiumfolie ist entweder nicht mit einen, Primer vorbehandelt oder ist beispielsweise ein- oder beidseitig mit einem Primer vorbehandelt.

Geeignete Primer können z.B. aus den Reihen der Epoxidharze oder der Polyurethane ausgewählt werden.

Die kaltverformbaren Verbundfolien enthalten beispielsweise gereckte PVC-Folien, orientierte Polyesterfolien und orientierte Polyamidfolien. Geeignete Thermoplaste zur Erzeugung dieser Folien sind nachstehend aufgeführt.

Die PVC-Folien sind Folien auf Basis von halogenhaltigen Polymeren, d.h. Polymeren, des Vinylchlorids (PVC) oder von Vinylkunststoffen, enthaltend Vinylchlorideeinheiten in deren Struktur, wie Copolymere des Vinylchlorids mit Vinylestern von aliphatischen Säuren, Copolymere des Vinylchlorids mit Estern der Acryl- oder Methacrylsäure oder mit Acrylnitril, Copolymere des Vinylchlorids mit Dienverbindungen und ungesättigten Dicarboxylsäuren oder deren Anhydriden, Copolymere des Vinylchlorids und Vinylidenchlorids mit ungesättigten Aldehyden, Ketonen usw. oder Polymere und Copolymere des Vinylidenchlorids mit Vinylchlorid oder anderen polymerisierbaren Verbindungen. Die Thermoplaste auf Vinyl-Basis können auch auf an sich bekannte Weise mit Primär- oder Sekundärweichmacher weichgemacht sein.

Folien aus PVC sind wenigstens monoaxial (oPVC) gereckt oder können fallweise auch biaxial gereckt sein. Sind die gereckten PVC-Folien monoaxial gereckt, ist deren Dickenabnahme vorzugsweise im Bereich von 30 bis 40%.

Sind die Kunststoffolien aus Polyestern (PET-Folien), so sind Beispiele für die Polyester Polyalkylenterephthalate oder Polyalkylenisophthalate mit Alkylengruppen oder - resten mit 2 bis 10 Kohlenstoffatomen oder Alkylengruppen mit 2 bis 10 C-Atomen, die wenigstens durch ein -0- unterbrochen sind, wie z.B. Polyethylenterephthalat, Polypropylenterephthalat, Polybutylenterephthalat (Polytetramethylenterephthalet), Polydecamethylenterephthalat. Poly-1,4cyclohexyldimethylolterephthalat oder Polyethylen-2,6-naphthalen-dicarboxylat oder Polyalkylenterephthalat-und Polyalkylenisophthalat-Mischpolymere, wobei der Anteil an Isophthalat z.B. 1 bis 10 Mol-% beträgt, Mischpolymere und Terpolymere, sowie Blockpolymere und gepfropfte Modifikationen oben genannter Stoffe. Andere zweckmässige Polyester sind in der Fachwelt unter dem Kürzel PEN bekannt.

Andere Polyester sind Copolymere der Terephthalsäure und einer weiteren Polycarboxylsäure mit wenigstens einem Glykol. Zweckmässig sind dabei die Copolyester der Terephthalsäure, Ethylenglykol und einem zusätzlichen Glykol.Bevorzugt sind glykolmodifizierte Polyester, die der Fachwelt als PETG bekannt sind.

Weitere zweckmässige Polyester sind Polylalkylenterephthalate mit Alkylengruppen oder - resten mit 2 bis 10 Kohlenstoffatomen und Polylalkylenterephthalate mit Alkylengruppen oder -resten mit 2 bis 10 Kohlenstoffatomen, die durch ein oder zwei -0-unterbrochen sind. Weitere bevorzugte Polyester sind Polylalkylenterephthalate mit Alkylengruppen oder - resten mit 2 bis 4 Kohenstoffatomen. Zu diesen Polyethylenterephthalaten sind auch A-PET, PETP und das genannte PETG oder G-PET zu zählen. Ganz besonders bevorzugt sind Polyethylenterephthalat-Folien. Die Folien aus Polyester sind mono- oder vorzugsweise biaxial orientiert sein.

Sind die Kunststofffolien Polyamidfolien (PA), so gehören zu den Polyamiden beispielsweise Polyamid 6, ein Homopolymerisat aus ε-Caprolactam (Polycaprolac- tam); Polyamid 11, Polyamid 12, ein Homopolymerisat aus ω-Laurinlactam (Polylaurin- lactam); Polyamid 6,6, ein Homopolykondensat aus Hexamethylendiamin und Adipinsäure (Polyhexamethylenadipamid); Polyamid 6,10, ein Homopolykondensat aus Hexamethylendiamin und Sebacinsäure (Polyhexamethylensebacamid); Polyamid 6,12, ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamethylenterephthalamid), sowie Gemische davon. Die Folien aus Polyamid sind mono- oder vorzugsweise biaxial orientiert sein (oPA).

Vorliegende Verbundfolien können, uni die Siegeleigenschaften zu steuern, auf einer oder beiden freien Seiten Siegelschichten, wie Siegelfolien oder Siegellacke, z. B. auf Basis von Polyolefinen, wie Polyethylenen, Polyacrylaten, PVC-Harzen, Polyvinylidenchloriden, EVA Polyethylenterephthalate, insbesondere des Types A-PET, usw. aufweisen. Die freien Seiten oder wenigstens eine der freien Seiten, insbesondere der orientierten Polyesterfolien, können mit EVA (Ethylen/Vinylalkohol-Copolymer) oder einer amorphen Polyester-Siegelschicht des Types PET-A beschichtet sein.

Die einzelnen Schichten und insbesondere Folien, d.h. die erste Kunststoff-Folie gegen die Metallfolie und/oder die zweite Kunststoff-Folie gegen die Metallfolie und allfällige auf die freien Seiten der Verbundfolie zu liegen kommende Siegelfolien, können mittels eines Haftvermittlers und/oder Kaschierklebers miteinander verbunden werden.

Geeignete Kaschierkleber können lösungsmittelhaltig oder lösungsmittelfrei und auch wasserhaltig sein. Beispiele von Kaschierklebern sind lösungsmittelhaltige, lösungsmittelfreie oder wässrige Acrylatkleber oder Polyurethan-Kleber-Systeme. Aber auch Klebstoffe welche unter Einwirkung von energiereicher Strahlung (z.B. UV; Elektronen-Strahlen) aushärten, können eingesetzt werden.

Bevorzugt werden Kaschierkleber auf Polyurethan-Basis.

Als Haftvermittler können beispielsweise Produkte auf Basis von Di-isocyanat oder aliphatischen Polyestern eingesetzt werden.

Der Kaschierkleber, wie auch der Haftvermittler, kann beispielsweise in Mengen von 0,5 bis 10 g/m² vorzugsweise in Mengen von 2 bis 8 g/m² und insbesondere in Mengen von 3 bis 6 g/m² angewendet werden. Die Kaschierkleber können auch in solchen Mengen angewendet werden, dass sie Schichten von wenigstens 0,1 µm Dicke und maximal 12 µm Dicke ausbilden.

Die Oberfläche der Metallfolie kann durch entsprechende Vorbehandlung (z.B. bürsten, chromatieren, Ionisierungs-, Ozon-, Korona-, Flamm- oder Plasmabehandlung) eine verbesserte Haftung für den Kleber oder Lack oder für eine Extrusionsschicht aufweisen. Zur Unterstützung und Verbesserung der Verbundhaftung der Lacke, Haftvermittler oder Kaschier-Kleber zwischen den Kunststoffolien oder von extrudierten Schichten, ist es oft zweckmässig den Folien auf den Kleberzugewandten Seiten oder den Extrudaten eine ausreichende Oberflächenspannung zu vermitteln. Die Erhöhung der Oberflächenspannung kann vorzugsweise durch eine Ionisierungs-, Ozon-, Plasma-, Flamm- oder eine Koronavorbehandlung erfolgen.

Es kann auch vorteilhaft sein, die erste und/oder die zweite Kunststoff-Folie, jeweils mit der Metallfolie, ohne Kaschierkleber und/oder Haftvermittler, nur unter Druck und Wärmeeinwirkung, mit der Metallfolie zu verbinden.

Die erfindungsgemässen Verbundfolien können auf einer oder beiden freien Seiten, - - oder an einem daraus hergestellten Verpackungsbehälter dem Füllgut zugewandten Seite, auch Innenseite genannt, fallweise auch auf der am Verpackungsbehälter nach aussen weisenden Seite, auch Aussenseite genannt -- eine Siegelschicht, wie eine Siegelfolie oder einen Siegellack aus den genannten Materialien aufweisen. Der Verpackungsbehälter kann ein Bodenteil einer Durchdrückpackung aus einem Schulterbereich und darin angeordneten Vertiefungen sein. Die Siegelschicht ermöglicht es, an diesem Verpackungsbehälter, d.h. dem Bodenteil, aus der kaltverformten Verbundfolie nach vorliegender Erfindung, einen Deckel anzubringen. Solche Deckel können beispielsweise Deckelfolien sein, die über die Schulter am Verpackungsbehälter angesiegelt werden. Geeignete Deckelfolien können eine Metallfolie, wie eine Aluminiumfolie, enthalten und auf der Metallfolie kann auf einer oder beiden Seiten Kunststoffolien und/oder Lacke aufgebracht sein. Auf wenigstens einer Seite der Deckelfolie kann eine äusserste Schicht in Form einer Siegelschicht vorgesehen sein. Über die Siegelschicht an der Deckelfolie oder über die Siegelschicht am Bodenteil oder über beide Siegelschichten kann der Bodenteil und die Deckefolie miteinander verbunden werden.

Auf der Innenseite und/oder der Aussenseite oder gegen die Innen- und/oder die Aussenseite gerichtet, jeweils auf einen Verpackungsbehälter aus der erfindungsgemässen Verbundfolie bezogen, können die Verbundfolien Lacke und/oder Druckmuster aufweisen. Beispielsweise können die erste und/oder die zweite Folie des Verbundes auf der Metallfolien zugewandten Seite einen Konterdruck aufweisen. Ein Konterdruck ist besonders für durchsichtige und durchscheinende Folien geeignet. Es ist auch möglich die erste und/oder die zweite Folie auf deren Aussenseiten mit einem Druckmuster zu versehen und fallweise das Druckmuster mit einem Lack abzudecken. Es kann auch die Aussen- und/oder die Innenseite des Verbundes mit einem Lack versehen werden, wobei der Lack fallweise auch bedruckt sein kann und/oder auf den Abpackanlagen bedruckbar ist.

Vorliegende Erfindung betrifft auch Blisterverpackungen oder Durchdrückpackungen oder Bodenteile dafür, aus einer kaltverformten Verbundfolie nach vorliegender Erfindung.

Aus der erfindungsgemässen Verbundfolie können beispielweise mittels eines Tiefungsprozesses, wie durch Streckziehen, d.h. durch mechanische Kaltumformung mittels Formenstempel, die gewünschten Blister- oder Durchdrückpackungen und besonders Bodenteile dafür, hergestellt werden. Beim Streckziehen wird die Verbundfolie zwischen der Matrize und dem Niederhalter festgehalten, während ein Formenstempel der Verbundfolie unter Verstreckung die gewünschte Kontur aufzwingt. Die Verformung kann beispielsweise kalt oder bei lediglich leicht erhöhten Temperaturen von bis zu 50°C erfolgen. Vorliegende Verbundfolien können aufgrund ihres Verhalten beim Umformen vorzugsweise für Blister- und Durchdrückpackungen enthaltend Vertiefungen mit Wandbereichen hoher Steigung verwendet werden. Es kann beispielsweise eine Steigung der Wandbereiche von 50 Winkelgraden und höher bis zu annähernd 90 Winkelgraden gegenüber der horizontalen Oberfläche der Verbundfolie erzielt werden. Das Verhältnis von Durchmesser zu Tiefe einer einzelnen Vertiefung kann z.B. 2,5 bis 3,0 betragen. Die aus vorliegender Verbundfolie gefertigten Durchdrückpackungen können Seitenkantenlängen von beispielsweise 30 bis 200 mm aufweisen und die Schulterbereiche an den Rändern und zwischen den Vertiefungen können beispielsweise eine Breite von 1 bis 10 mm und vorzugsweise 3 bis 6 mm aufweisen. Solche Blisterpackungen oder Durchdrückpackungen können beispielsweise 2 bis 100, zweckmässig 6 bis 60 und vorteilhaft 10 bis 30 Vertiefungen, Näpfe oder Höfe zur Aufnahme von z. B. einer Tablette, Kapsel, Ampulle, von Dragées oder von Pulvern. In einer Vertiefung können auch beispielsweise mehrere Einzelstücke -- oder anstelle der genannten Inhaltstoffe - - z. B. auch technische Kleinteile aufgenommen werden. Die Verbundfolie wird während des Streckziehens aus der reinen Dehnung beansprucht. Dabei zeigt der an der Verpackung nach aussen weisende Kunststoff, in der Regel die zweite Kunststoff-Folie der Verbundfolie, eine hohe Verfestigung während des Verstreckens und eine hohe Dehnfähigkeit auf. Bei der Dehnung der zweiten Kunststoff-Folie wird die Aluminium-Folie mechanisch unterstützt. Dabei sind Dehnungen erreichbar, die weit über der erreichbaren Grenze der Dehnung einer alleinstehenden Aluminiumfolie liegen würde.

Durch die bevorzugte biaxial gereckten Kunststoff-Folien in vorliegender Verbundfolie wird ein isotropes Fliessverhalten der Verbundfolie erreicht und die Erscheinung von Spannungskonzentration vermieden. Sobald die Metall-Folie während des Verformens einzuschnüren beginnt, kann die zweite Kunststoff-Folie die Kraft an dieser Stelle durch die hohe Verfestigung beim Fliessen übernehmen. Während des Streckziehens fliesst das Material der Verbundfolie bevorzugt aus der Breite, statt aus der Dicke, wobei R-Werte von kleiner als 1 vorteilhaft sind. Im weiteren ist eine hohe Bruchdehnung der Verbundfolie zu beobachten. Als weitere bevorzugte Eigenschaft vorliegender Verbundfolie kann sehr oft eine geringe Rückfederung nach der Umformung beobachtet werden.

Die erste Kunststoff-Folie, welche bei Verpackungen aus vorliegenden Verbundfolien auf die Innenseite und zum Produkt weist, ist insbesondere physiologisch unbedenklich und darf nur ein geringes oder bevorzugt kein Aufnahmevermögen für Gase und Flüssigkeiten aufweisen. Die erste Kunststoff-Folie weist vorzugsweise eine hohe Steifigkeit auf. Eine weitere bevorzugte Eigenschaft dei ersten Kunststoff-Folie ist die mechanische Unterstützung der Aluminium-Folie bei der Dehnung. Die aus der vorliegenden Verbundfolie gefertigten Blister-oder Durchdrückpackungen lassen durch die Eigenschaften der Verbundfolien und der dadurch erzielbaren stärkerern Verformung eine Reduktion der Blisterfläche von bis zu 10% erreichen.

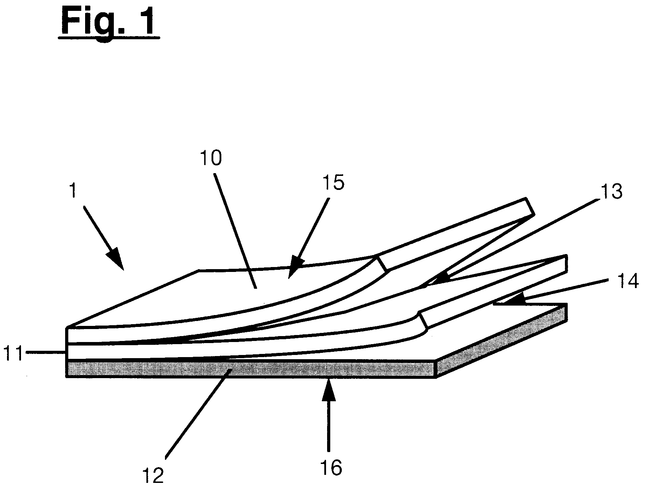

Die Figur 1 zeigt schematisch den Aufbau der erfindungsgemässen Verbundfolie 1. Die Verbundfolie 1 weist eine Metallfolie 11 auf, die auf einer Seite mit der ersten Kunststoff-Folie 10 und auf der anderen Seite mit der zweiten Kunststoff-Folie 12 beschichtet ist. Die Pfeile 13, 14 deuten an, dass zwischen den einzelnen Schichten ein Primer, ein Haftvermittler und/oder ein Kaschierkleber angeordnet werden kann. Sofern die Schichten 10, 11 selbst nicht oder nicht genügend siegelbar sind, kann auf der freien Seiten 15 der ersten Kunststoff-Folie 10 und/oder auf der freien Seiten 16 der zweiten Kunststoff-Folie 12 eine Siegelschicht in Form eines Siegellackes oder einer siegelfähigen Folie angeordnet werden. In der Regel bildet die zweite Kunststoff-Folie 12 an einer Verpackung die Aussenseite, während die erste Kunststoff-Folie 10 gegen den Inhalt der Verpackung gerichtet ist.

## Patentansprüche

1. Kaltverformbare Verbundfolien, enthaltend eine wasserdampf- und gasundurchlässige Sperrschicht und beidseitig der Sperrschicht wenigstens eine Kunststoffschicht,
dadurch gekennzeichnet, dass
die Verbundfolie einen Schichtaufbau aufweist, enthaltend nacheinander:
a) eine erste Kunststoff-Folie aus der Reihe der gereckten PVC-Folien oder der orientierte Polyesterfolien und
b) eine Metallfolie und
c) eine zweite Kunststoff-Folie aus der Reihe der gereckten PVC-Folien, der orientiertenPolyesterfolien oder der orientierten Polyamidfolien.

2. Kaltverformbare Verbundfolien nach Anspruch 1, dadurch gekennzeichnet dass die Verbundfolie einen Schichtaufbau aufweist, enthaltend nacheinander:
a) eine erste Kunststoff-Folie aus der Reihe der gereckten PVC-Folien
b) eine Metallfolie und
c) eine zweite Kunststoff-Folie aus der Reihe der orientierten Polyesterfolien oder der orientierten Polyamidfolien.

3. Kaltverformbare Verbundfolien nach Anspruch 1, dadurch gekennzeichnet dass die Verbundfolie ein Schichtaufbau aufweist, enthaltend nacheinander:
a) eine erste Kunststoff-Folie aus der Reihe der orientierten Polyesterfolien und
b) eine Metallfolie und
c) eine zweite Kunststoff-Folie aus der Reihe der orientierten Polyesterfolien oder der orientierten Polyamidfolien.

4. Kaltverformbare Verbundfolien nach Ansprüchen 1 bis 3, dadurch gekennzeichnet dass die orientierten Polyesterfolien der Schicht a) oder c) oder a) und c) aus einem siegelbaren Polyethylenterephthalat, insbesondere des Types A-PET, sind oder dass die orientierten Polyesterfolien der Schicht a) oder c) oder a) und c) auf der freien Seite eine Siegelschicht tragen.

5. Kaltverformbare Verbundfolie nach Anspruch 4, dadurch gekennzeichnet dass die freien Seiten oder wenigstens eine der freien Seiten der orientierten Polyesterfolien mit EVA (Ethylen/Vinylalkohol -Copolymer) oder einer amorphen Polyester - Siegelschicht (A-PET) beschichtet sind.

6. Kaltverformbare Verbundfolien nach Anspruch 1, dadurch gekennzeichnet, dass die gereckten PVC-Folien eine Dicke von 10 bis 200 µm, vorzugsweise von 10 bis 100 µm aufweisen, dass die orientierten Polyesterfolien eine Dicke von 5 bis 60 µm, vorzugsweise von 10 bis 30 µm aufweisen, dass die Metallfolie eine Dicke von 5 bis 200 µm, vorzugsweise von 20 bis 100 µm aufweist und dass die orientierten Polyamidfolien eine Dicke von 5 bis 40 µm, vorzugsweise von 12 bis 30 µm, aufweisen.

7. Kaltverformbare Verbundfolien nach Anspruch 1, dadurch gekennzeichnet, dass die Metallfolie eine Aluminiumfolie, zweckmässig aus einer Aluminiumlegierung AlFeMn, AlFeSi oder AlFeSiMn, vorzugsweise in einer Reinheit von 97,5 und höher und insbesondere in einer Reinheit von 98,5 und höher, ist.

8. Kaltverformbare Verbundfolien nach Anspruch 1, dadurch gekennzeichnet, dass die Metallfolie ein- oder beidseitig mit einem Primer vorbehandelt ist.

9. Kaltverformbare Verbundfolie nach Anspruch 1, dadurch gekennzeichnet, dass die orientierten Polyesterfolien und die orientierten Polyamidfolien biaxial orientiert sind.

10. Kaltverformbare Verbundfolie nach Anspruch 1, dadurch gekennzeichnet dass die gereckten PVC-Folien monoaxial gereckt sind, vorzugsweise unter einer Dickenabnahme von 30 bis 40 %.

11. Kaltverformbare Verbundfolie nach Anspruch 1, dadurch gekennzeichnet dass zwischen den einzelnen Schichten ein Haftvermittler und/oder ein Kaschierkleber angeordnet ist.

12. Bodenteile von Blisterpackungen oder Durchdrückpackungen aus einer kaltverformten Verbundfolie nach Anpruch 1.
